**Europäisches Patentamt**

**European Patent Office**

**Office européen des brevets**

(11) Veröffentlichungsnummer : **0 464 336 B1**

(19)

(12) **EUROPÄISCHE PATENTSCHRIFT**

(45) Veröffentlichungstag der Patentschrift :
**30.12.92 Patentblatt 92/53**

(21) Anmeldenummer : **91107162.9**

(22) Anmeldetag : **03.05.91**

(51) Int. Cl.⁵ : **B01J 8/02,** B01D 53/04,
B01D 46/30

(54) **Reaktor mit querdurchströmtem Festbett.**

(30) Priorität : **05.07.90 DE 9010183 U**

(43) Veröffentlichungstag der Anmeldung :
**08.01.92 Patentblatt 92/02**

(45) Bekanntmachung des Hinweises auf die
Patenterteilung :
**30.12.92 Patentblatt 92/53**

(84) Benannte Vertragsstaaten :
**AT DE IT NL**

(56) Entgegenhaltungen :
**EP-A- 0 198 133**
**US-A- 3 770 388**
**US-A- 4 004 897**
**US-A- 4 443 419**

(73) Patentinhaber : **Bergwerksverband GmbH**
**Franz-Fischer-Weg 61**
**W-4300 Essen 13 (DE)**

(72) Erfinder : **Wünnenberg, Wolfgang**
**Tiergarten 16**
 **W-4300 Essen 16 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft einen Reaktor mit querdurchströmtem Festbett, der seitlich von Hauptjalousien begrenzt wird, durch deren Öffnungen der Gasstrom hindurchgeführt wird, wobei den Hauptjalousien Nebenjalousien zugeordnet sein können, die parallel zu den Hauptjalousien ausgerichtet sind.

Solche Reaktoren mit querdurchströmtem Festbett sind als Wanderbettreaktoren beispielsweise aus der EP 0 198 133 B1 bekannt geworden. Die bei diesen Wanderbettreaktoren verwendeten Hauptjalousien bestehen aus geneigt angeordneten Jalousieeinheiten und sind über ihre gesamte Fläche gasundurchlässig. Die gesamte Gasmenge strömt durch die Zwischenräume zwischen den Hauptjalousieeinheiten. Die dabei bewirkte Erhöhung der Gasgeschwindigkeit in diesem Bereich führt häufig zu unerwünschten Schüttgutausträgen.

Es ist außerdem bereits bekannt, wie in den Druckschriften JP 55-139829 (01. November 1980), JP 56-28633 (20. Mai 1981) sowie US-PS 4 443 419 beschrieben ist, sowohl die anströmseitigen als auch die abströmseitigen Hauptjalousien von Wanderbettreaktoren, die aus geneigt angeordneten Hauptjalousieeinheiten bestehen, mit zusätzlich an diesen Einheiten angeordneten Rückhalte- und Führungselementen zu versehen, die jedoch ebenfalls gasundurchlässig ausgebildet sind, so daß es auch bei diesen Wanderbettreaktoren abströmseitig zu unerwünschten Schüttgutausträgen kommen kann. Ein weiterer Nachteil ist, daß bei dieser Ausgestaltung nicht nur abströmseitig, sondern auch anströmseitig Rückhalte- und Führungselemente vorgesehen sind, die die Strömungsführung in diesem Bereich beeinträchtigen.

Der Erfindung liegt die Aufgabe zugrunde, das Austragen von Schüttgutteilchen zu unterbinden.

Diese Aufgabe wird durch die im Kennzeichen des Patentanspruchs 1 niedergelegten Merkmale gelöst. Weiterbildungen sind in den Ansprüchen 2 bis 9 enthalten.

Durch die jeder Jalousieeinheit der abströmseitigen Hauptjalousie zugeordneten gasdurchlässigen Rückhalte- und Führungselemente für die Schüttgutpartikel wird der unerwünschte Austrag von Schüttgutpartikeln vollständig unterbunden. Da die Hauptmenge des Gases durch die Öffnungen des gasdurchlässigen Rückhalte- und Führungselementes strömt, wird ein Aufwirbeln des Schüttgutes und dessen Austrag aus den Zwischenräumen der Hauptjalousieeinheiten zuverlässig vermieden.

Weitere Vorteile sind, daß Lastwechselschwankungen besser verkraftet werden. Wegen des geringeren Druckverlustes werden höhere Gasgeschwindigkeiten ermöglicht und dadurch die Betriebskosten stark verringert. Auch die Investitionen sind niedriger, da die Bauvolumina der Reaktoren mit querdurchströmtem Festbett verkleinert werden können.

Die Erfindung wird nachfolgend anhand der Zeichnung näher beschrieben.

Es zeigen:

Figur 1 Einen Reaktor mit querdurchströmtem Festbett mit Hauptjalousien, deren Jalousieeinheiten mit gasdurchlässigen Rückhalte- und Führungselementen ausgerüstet sind.
Figur 2 und 3 Teilschnitte des Gegenstandes der Figur 1 in einem Querschnitt und in einem Längsschnitt.
Figur 4, 5 und 6 Andere Anordnungen des gasdurchlässigen Rückhalte- und Führungselementes an der Hauptjalousieeinheit.
Figur 7 bis 10 Unterschiedliche Anordnungen von Hauptjalousieeinheiten mit gasdurchlässigen Rückhalte- und Führungselementen, denen jeweils Nebenjalousien unterschiedlicher Ausbildung zugeordnet sind.
Figur 11 Eine Prinzipskizze zu der Auswirkung des gasdurchlässigen Rückhalte- und Führungselementes auf das Böschungsverhalten des Schüttgutes im Zwischenraum zwischen den Hauptjalousieeinheiten.

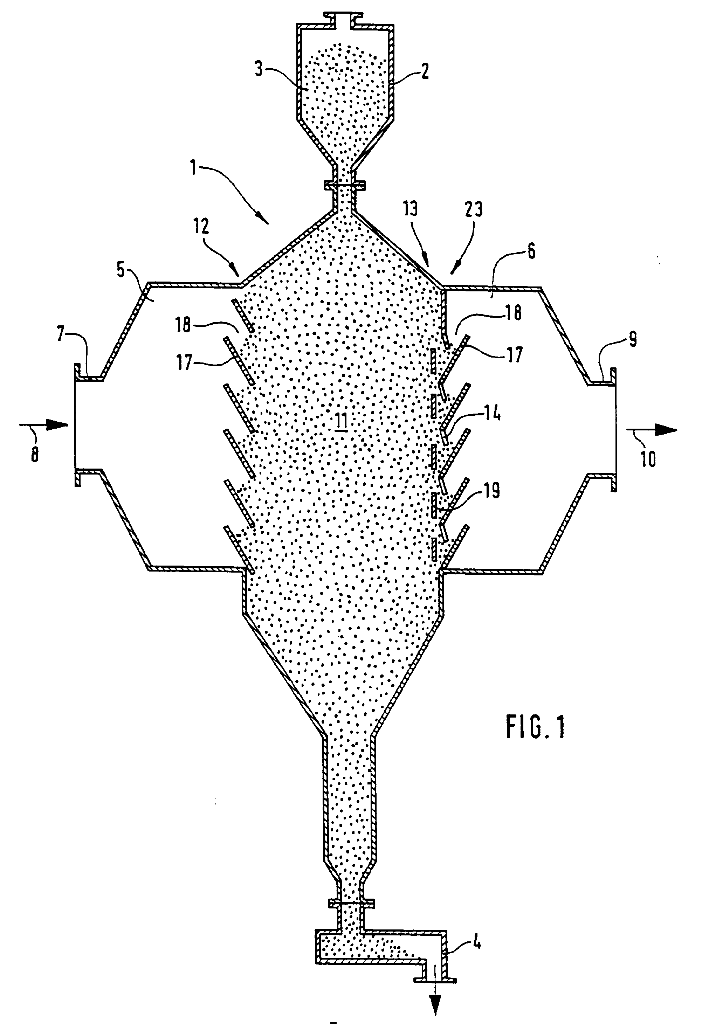

Figur 1 zeigt einen Querschnitt durch einen Reaktor mit querdurchströmtem Festbett 1, der über einen Aufgabebehälter 2 mit einem Schüttgut 3 beaufschlagt werden kann. Der Austrag kann über eine Austragsvorrichtung 4 erfolgen.

Dem Reaktor mit querdurchströmtem Festbett 1 sind seitlich eine Gaszuführungskammer 5 und eine Gasabführungskammer 6 zugeordnet, mit einem Anschlußstück 7 für den Gaseintritt 8 und einem Anschlußstück 9 für den Gasaustritt 10.

Die Kammern 5 und 6 sind vom Festbett 11 durch eine anströmseitige Hauptjalousie 12 sowie eine abströmseitige Hauptjalousie 23 abgetrennt, die aus Jalousieeinheiten 17 gebildet werden, zwischen denen Gasdurchlässe 18 angeordnet sind. Den abströmseitigen Hauptjalousien 23 können abströmseitige Nebenjalousien 13 vorgeschaltet sein, die aus Jalousieeinheiten 19 gebildet werden.

Jeder Hauptjalousieeinheit 17 sind auf der Abströmseite gasdurchlässige Rückhalte- und Führungselemente 14 zugeordnet, wodurch ein unerwünschter Austrag von Schüttgutpartikeln in die Gasabführkammer 6 zuverlässig vermieden wird.

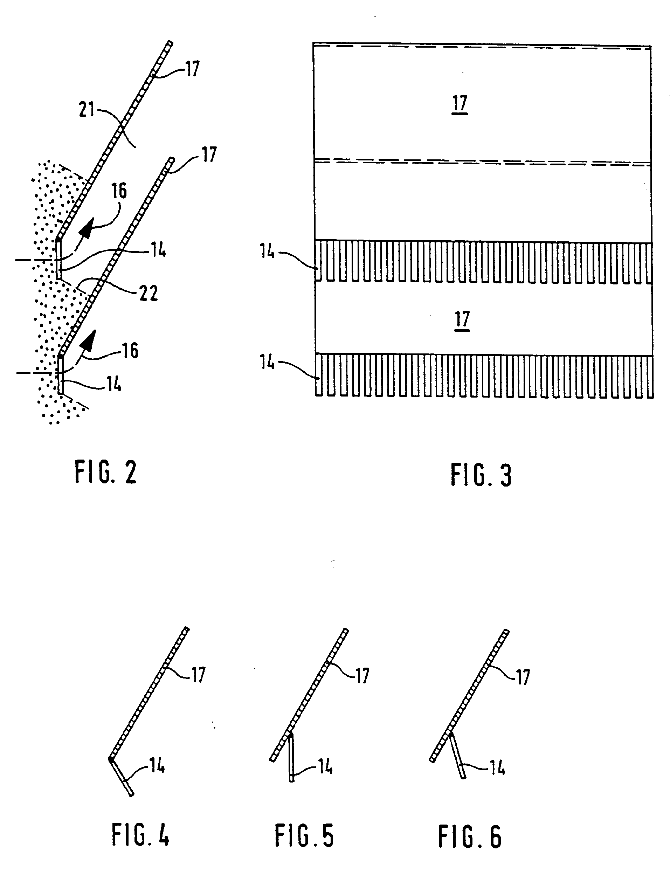

Wie Figur 2 zeigt, strömt die Hauptgasmenge, die durch einen Strömungspfeil 16 angedeutet ist, durch das gasdurchlässige Rückhalte- und Führungselement 14 in den Zwischenraum 21 zwischen den Hauptjalousieeinheiten 17, ohne daß durch die Gasströmung Schüttgut von der Böschung 22 mitgerissen wird.

In der Figur 3 ist eine Seitenansicht von zwei Jalousieeinheiten 17 gemäß Figur 2 dargestellt, woraus die in diesem Fall spaltsiebartige Ausgestaltung der gasdurchlässigen Rückhalte- und Führungselemente 14 ersichtlich ist.

In den Figuren 4, 5 und 6 sind beispielhaft andere Anordnungsmöglichkeiten der gasdurchlässigen Rückhalte- und Führungselemente 14 an den Jalousieeinheiten 17 abgebildet. Im Unterschied zur Anordnung gemäß Figur 2 ist in Figur 4 das gasdurchlässige Rückhalte- und Führungselement 14 geneigt am Ende der Hauptjalousieeinheit 17 befestigt.

Die Anbringung des gasdurchlässigen Rückhalte- und Führungselementes 14 kann auch seitlich an den Hauptjalousieeinheiten 17 erfolgen, wobei die Richtung senkrecht (Figur 5) oder geneigt (Figur 6) sein kann.

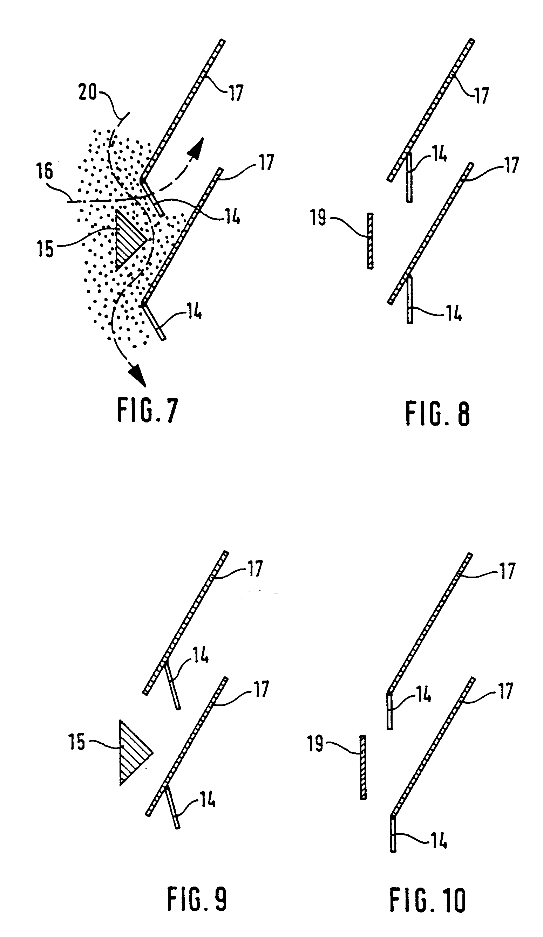

Wie in den Figuren 7 bis 10 abgebildet ist, können den Hauptjalousieeinheiten 17 Nebenjalousieeinheiten 15 bzw. 19 zugeordnet sein, die zusätzlich Führungs- und Druckentlastungsfunktionen im Hinblick auf das Schüttgut haben, wie dies beispielsweise Figur 7 verdeutlicht. Der Gasströmungspfeil 16 zeigt den unbehinderten Hauptgasstromweg. Der Schüttgutströmungspfeil verdeutlicht, daß in Jalousienähe ein ungehinderter Schüttgutfluß von oben nach unten erfolgt, da die Nebenjalousieeinheit 15 als Druckentlastungskörper vom Schüttgutdruck wirkt.

## Beispiel

In einem Reaktormodell wurden Versuche durchgeführt. Das Modell entspricht in seinen wesentlichen Abmessungen einem großtechnischen Festbettreaktor (d. h. Maßstab 1 : 1):

```
–  Bettiefe:                        1,75 m
–  Hauptjalousieabstand:            300 mm
–  Hauptjalousieneigung:            30°
–  Eckneigungswinkel:               34,4°


–  Originalschüttgut
   (Aktivkoks: Durchmesser 5,1 mm, Länge 1 - 10 mm)
–  Anzahl der Hauptjalousieeinheiten:    6
–  Hauptjalousiebreite:             800 mm
–  Bezugsfläche für die Berechnungen
   der Strömungsgeschwindigkeiten:  F = 1,28 m²
```

Tabelle 1 gibt die Unterschiede im Druckverlust wieder, die bei Verwendung von gasdurchlässigen Rückhalte- und Führungselementen aufgetreten sind.

## Tabelle 1

| W(m/s) | Pges ohne* | (mm WS) mit* | PAustritt ohne* | (mm WS) mit* |
|---|---|---|---|---|
| 0,2 | 70 | 70 | 6 | 4 |
| 0,23 | 93 | 91 | 10 | 8 |
| 0,26 | 111 | 107 | 11 | 8 |
| 0,30 | 148 | 130 | 29 | 11 |
| 0,33 | 185 | 153 | 45 | 11 |
| 0,36 | 207 | 170 | 54 | 13 |
| 0,4 | Partikel- austrag | 205 | Partikel- austrag | 15 |

\* gasdurchlässiges Rückhalte- und Führungselement

Neben der hohen Betriebssicherheit (kein Partikelaustrag) zeichnet sich die Ausgestaltung mit gasdurchlässigem Rückhalte- und Führungselement durch erheblich niedrigere Druckverluste ab Strömungsgeschwindigkeit (w) oberhalb 0,26 m/s aus. Ferner ist das neutrale Verhalten bei Lastwechselbetrieb bemerkenswert.

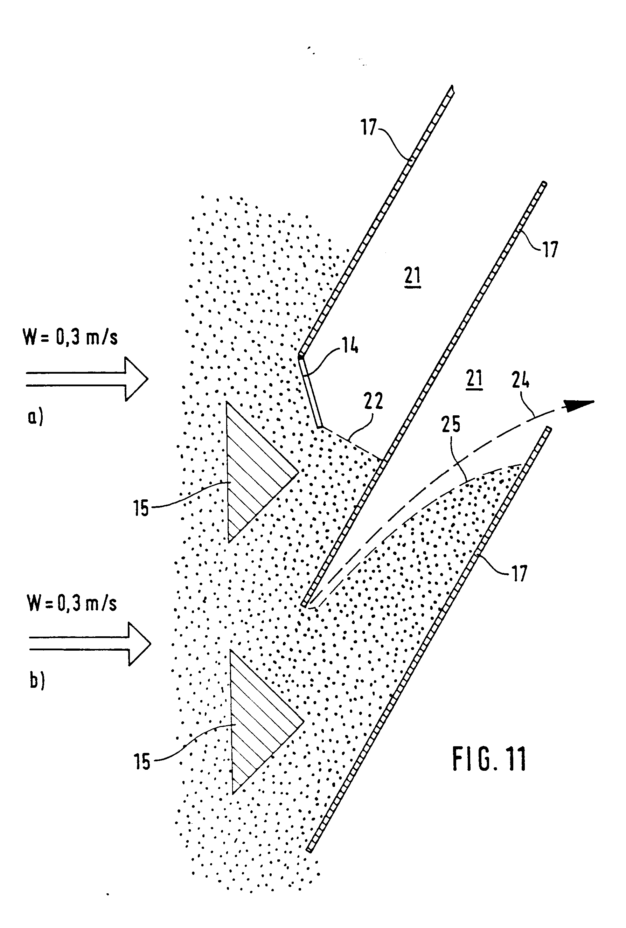

Aus Figur 11 geht hervor, daß sich bei Verwendung eines gasdurchlässigen Rückhalte- und Führungselementes 14, Fall a), oberer Bildteil, bei mittleren Strömungsgeschwindigkeiten w von 0,3 m/s eine nach unten geneigte Böschung 22 ausbildet. Bei der gleichen Strömungsgeschwindigkeit des Gases wie im Fall a), wird im Fall b), unterer Teil bei Figur 11 (dort fehlt das gasdurchlässige Rückhalte- und Führungselement 14), ein Eintrag in den Zwischenraum 21 beobachtet, der zu einer ansteigenden Böschung 25 führt. Der Austragsströmungspfeil 24 deutet an, daß es bereits bei dieser Geschwindigkeit schon zu Austrägen von Schüttgutpartikeln aus dem Zwischenraum 21 kommt. In beiden Fällen sind Nebenjalousieeinheiten 15 vor den Hauptjalousieeinheiten 17 angeordnet, die den Schüttungsdruck verringern. Bei fehlenden Nebenjalousieeinheiten 15 erfolgt die Ausfüllung der Jalousiezwischenräume 21 mit Schüttgut bereits bei noch niedrigeren Strömungsgeschwindigkeiten als 0,3 m/s.

### Patentansprüche

1. Reaktor mit querdurchströmtem Festbett, der seitlich von Hauptjalousien begrenzt wird, durch deren Öffnungen der Gasstrom hindurchgeführt wird, dadurch gekennzeichnet, daß jeder Jalousieeinheit (17) der abströmseitigen Hauptjalousie (23) ein gasdurchlässiges Rückhalte- und Führungselement (14) für Schüttgutpartikel zugeordnet ist.

2. Reaktor nach Anspruch 1, dadurch gekennzeichnet, daß das gasdurchlässige Rückhalte- und Führungselement (14) am unteren Ende der Hauptjalousieeinheit (17) befestigt ist.

3. Reaktor nach Anspruch 1, dadurch gekennzeichnet, daß das gasdurchlässige Rückhalte- und Führungselement (14) im Abstand vom unteren Ende seitlich an der Hauptjalousieeinheit (17) befestigt ist.

4. Reaktor nach einem der vorhergehenden Ansprüche, dadurch gekennzeichnet, daß das gasdurchlässige Rückhalte- und Führungselement (14) senkrecht angeordnet ist.

5. Reaktor nach einem der Ansprüche 1 bis 3, dadurch gekennzeichnet, daß das gasdurchlässige Rückhalte- und Führungselement (14) geneigt angeordnet ist.

6. Reaktor nach einem der vorhergehenden Ansprüche, dadurch gekennzeichnet, daß das gasdurchlässige Rückhalte- und Führungselement (14) als Spaltsieb ausgebildet ist.

7.  Reaktor nach einem der Ansprüch 1 bis 5, dadurch gekennzeichnet, daß das gasdurchlässige Rückhalte- und Führungselement (14) als Lochsieb ausgebildet ist.

8.  Reaktor nach einem der Ansprüche 1 bis 5, dadurch gekennzeichnet, daß das gasdurchlässige Rückhalte- und Führungselement (14) als Gewebesieb ausgebildet ist.

9.  Reaktor nach einem der Ansprüche 1 bis 8, dadurch gekennzeichnet, daß vor den abströmseitigen Hauptjalousieeinheiten (17) Nebenjalousieeinheiten (15, 19) angeordnet sind.

## Claims

1.  Cross-flow fixed bed reactor, laterally confined by primary louvres through the openings of which the gas flow passes, characterized in that each unit (17) of the outlet side primary louvre (23) is equipped with a permeable retaining and guiding element (14) for bulk material particles.

2.  Reactor as per claim 1, characterized in that the permeable retaining and guiding element (14) is mounted to the lower extremity of the primary louvre unit (17).

3.  Reactor as per claim 1, characterized in that the permeable retaining and guiding element (14) is mounted laterally to the primary louvre unit (17) at some distance from its lower end.

4.  Reactor as per anyone of the preceding claims, characterized in that the permeable retaining and guiding element (14) is arranged in a vertical position.

5.  Reactor as per anyone of claims 1 through 3, characterized in that the permeable retaining and guiding element (14) is arranged in an inclined position.

6.  Reactor as per anyone of the preceding claims, characterized in that the permeable retaining and guiding element (14) is of a slotted screen-type configuration.

7.  Reactor as per anyone of claims 1 through 5, characterized in that the permeable retaining and guiding element (14) is of a perforated screen-type configuration.

8.  Reactor as per anyone of claims 1 through 5, characterized in that the permeable retaining and guiding element (14) is of a cloth screen-type configuration.

9.  Reactor as per anyone of claims 1 through 8, characterized in that secondary louvre units (15, 19) are arranged in front of the primary louvre units (17) on the outlet side.

## Revendications

1.  Réacteur à lit fixe traversé au sens transversal, délimité latéralement par des jalousies primaires par les orifices desquelles passent les flux de gaz, caractérisé en ce qu'à chaque unité (17) de la jalousie primaire du côté sortie (23) a été assorti un élément de rétention et de guidage perméable au gaz (14) rétenant les particules de la charge.

2.  Réacteur d'après la revendication 1, caractérisé en ce que l'élément de rétention et de guidage perméable (14) est fixé à l'extrémité inférieure de l'unité de jalousies primaires (17).

3.  Réacteur d'après la revendicaiton 1, caractérisé en ce que l'élément de rétention et de guidage perméable (14) est fixé latéralement et à une certaine distance de l'extrémité inférieure de l'unité de jalousies primaires (17).

4.  Réacteur d'après une des revendications précédentes, caractérisé en ce que l'élément de rétention et de guidage perméable (14) est orienté au sens vertical.

5. Réacteur d'après une des revendications 1 à 3, caractérisé en ce que l'élément de rétention et de guidage perméable (14) a été fixé dans une position inclinée.

6. Réacteur d'après une des revendications précédentes, caractérisé en ce que l'élément de rétention et de guidage perméable (14) est d'une configuration du type tamis à fentes.

7. Réacteur d'après une des revendications 1 à 5, caractérisé en ce que l'élément de rétention et de guidage perméable (14) est configuré en tamis perforé.

8. Réacteur d'après une des revendications 1 à 5, caractérisé en ce que l'élément de rétention et de guidage perméable (14) est configuré en tamis de tissue.

9. Réacteur d'après une des revendications 1 à 8, caractérisé en ce que, en amont des unités de jalousies primaires (17) du côté sortie ont été disposées des unités de jalousies secondaires (15, 19).

FIG.1

FIG. 2

FIG. 3

FIG. 4

FIG. 5

FIG. 6

8

FIG.7

FIG. 8

FIG. 9

FIG. 10

FIG. 11